(19) Europäisches Patentamt
European Patent Office
Office européen des brevets

(11) **EP 4 465 762 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **24172632.2**

(22) Anmeldetag: **26.04.2024**

(51) Internationale Patentklassifikation (IPC):
**H05B 3/84** *(2006.01)*   *H05B 3/34* *(2006.01)*
**H05B 3/58** *(2006.01)*   *H05B 3/54* *(2006.01)*

(52) Gemeinsame Patentklassifikation (CPC):
**H05B 3/84;** H05B 3/34; H05B 3/54; H05B 3/58;
H05B 2203/011; H05B 2203/013

(54) **HEIZBARE SENSORABDECKUNG**

HEATABLE SENSOR COVER

COUVERCLE CHAUFFANT POUR CAPTEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.05.2023 DE 102023113026**

(43) Veröffentlichungstag der Anmeldung:
**20.11.2024 Patentblatt 2024/47**

(73) Patentinhaber: **SICK AG**
**79183 Waldkirch (DE)**

(72) Erfinder:
• **Russ, Thomas**
**79211 Denzlingen (DE)**
• **Lemke, Florian**
**79104 Freiburg (DE)**

(74) Vertreter: **Manitz Finsterwald**
**Patent- und Rechtsanwaltspartnerschaft mbB**
**Martin-Greif-Straße 1**
**80336 München (DE)**

(56) Entgegenhaltungen:
WO-A1-2021/143840    CN-A- 114 815 358
US-A- 4 952 783    US-A1- 2010 176 118
US-B2- 10 609 262

**Beschreibung**

Die Erfindung betrifft eine heizbare Abdeckung für einen optischen Sensor.

Optische Sensoren, bei denen es sich beispielsweise um Laserscanner handelt, sind häufig durch eine transparente Abdeckung gegenüber Einwirkungen aus der Umgebung geschützt. Eine solche Abdeckung ist typischerweise zylinderförmig ausgebildet. Die Umgebungsbedingungen, unter denen die optischen Sensoren eingesetzt werden, können jedoch dazu führen, dass sich Feuchtigkeit oder sogar Eis an der Oberfläche der Abdeckung bildet. Dadurch kann die Transparenz der Abdeckung eingeschränkt werden, und aufgrund Feuchtigkeit und/oder Eis an der Abdeckung kann Streustrahlung auftreten. Dadurch kann die Leistungsfähigkeit der optischen Sensoren insgesamt aufgrund der Umgebungsbedingungen eingeschränkt sein, insbesondere bei niedrigen Temperaturen.

Um zu verhindern, dass sich Feuchtigkeit und Eis an der Oberfläche von optischen Sensoren niederschlagen, können die Abdeckungen der optischen Sensoren mit einer Heizung versehen sein. Bei optischen Sensoren mit einer ebenen Abdeckung wird eine solche Heizung häufig durch Heizspiralen realisiert, die auf der Innenseite einer Abdeckung derart angeordnet werden, dass sie eine optische Eintrittsöffnung und Austrittsöffnung des jeweiligen optischen Sensors umgeben. Die Heizspiralen können beispielsweise auf die Abdeckung aufgedampft oder mit Hilfe einer Trägerfolie auf die Abdeckung aufgeklebt werden.

Abdeckungen optischer Sensoren sind jedoch häufig aus Kunststoff hergestellt. Im Vergleich zu Glas weist ein solcher Kunststoff eine erheblich schlechtere Wärmeleitfähigkeit und einen erheblich höheren Wärmeausdehnungskoeffizient auf. Die Verwendung von Heizspiralen kann daher bei einer Abdeckung aus Kunststoff zu einer inhomogenen Heizung und/oder zu einer Heizfunktion insgesamt führen, die nicht zum Entfernen von Feuchtigkeit und Eis von der Abdeckung ausreicht. Darüber hinaus können Veränderungen der optischen Eigenschaften der Abdeckung bei einer Verwendung von Heizspiralen auftreten.

Wenn es sich bei dem optischen Sensor um einen Scanner handelt, ist der erforderliche Flächenanteil für die optische Öffnung bezogen auf die Gesamtfläche der Abdeckung meistens deutlich größer als bei vielen statischen optischen Sensoren, die oftmals keine Scanfunktion aufweisen. Da der Flächenbereich, der bei einem scannenden optischen Sensor für Heizspiralen zur Verfügung steht, somit erheblich eingeschränkt ist, würde eine Verwendung von Heizspiralen bei scannenden optischen Sensoren zwangsläufig zu einer ineffizienten Heizung der Abdeckung führen.

Aus der US 4 952 783 A ist eine heizbare Abdeckung mit den Merkmalen gemäß dem Oberbegriff des Anspruchs 1 bekannt.

Die CN 114 815 358 A beschreibt eine heizbare Anzeigetafel mit Merkmalen gemäß einer ähnlichen Technologie.

Eine Aufgabe der Erfindung besteht darin, eine Abdeckung für einen optischen Sensor zu schaffen, die über einen Bereich einer optischen Öffnung des Sensors homogen und ausreichend heizbar ist.

Diese Aufgabe wird durch eine heizbare Abdeckung mit den Merkmalen des Anspruchs 1 gelöst. Vorteilhafte Weiterbildungen der Erfindung sind in den Unteransprüchen, der Beschreibung und den Zeichnungen angegeben.

Die heizbare Abdeckung ist für einen optischen Sensor vorgesehen und umfasst ein transparentes Abdeckungselement, eine transparente und elektrisch leitfähige Beschichtung, die an dem Abdeckungselement angeordnet ist, und mindestens zwei Elektroden, die voneinander beabstandet sind und jeweils mit der leitfähigen Beschichtung in Kontakt stehen. Ein jeweiliger Abstand zwischen jeweils zwei der Elektroden ist entlang einer jeweiligen Abstandslinie über die Beschichtung hinweg festgelegt. Jede der zumindest zwei Elektroden weist ferner mindestens eine Kontaktierungsposition auf, an der die jeweilige Elektrode mit einer Spannungsquelle verbunden ist. Die Kontaktierungspositionen jeweils zweier Elektroden sind in einer Richtung, die rechtwinklig zu der Abstandslinie verläuft, voneinander beabstandet.

Die heizbare Abdeckung zeichnet sich einerseits dadurch aus, dass eine transparente Beschichtung vorgesehen ist, die aufgrund ihrer elektrischen Leitfähigkeit erwärmt wird, wenn zwischen den mindestens zwei Elektroden eine Spannung anliegt. Die Beschichtung kann sich bezüglich ihrer Fläche über den größten Teil der heizbaren Abdeckung erstrecken, so dass eine großflächige Aufheizung der Abdeckung ermöglicht wird. Aufgrund der Transparenz der Beschichtung ist die Fläche der optischen Öffnung für den Sensor durch die Beschichtung nicht eingeschränkt. Dies ermöglicht die Verwendung der Abdeckung bei scannenden optischen Sensoren.

Die Abstandslinie ist eine imaginäre Linie zwischen den Elektroden über die Beschichtung hinweg. Entlang der Abstandslinie kann ein minimaler Abstand zwischen den Elektroden definiert sein. Da die Elektroden entlang der Abstandslinie voneinander beabstandet sind, erstreckt sich die Beschichtung somit im Wesentlichen zwischen den Elektroden, d.h. abgesehen von geringfügigen Randbereichen, die außerhalb der Elektroden liegen.

Da die Kontaktierungspositionen zweier voneinander verschiedener Elektroden einerseits an den beabstandeten Elektroden angeordnet sind und andererseits in der Richtung senkrecht zur Abstandslinie zwischen den Elektroden beabstandet sind, sind die jeweiligen Kontaktierungspositionen zweier voneinander verschiedener Elektroden somit in zwei Richtungen, die rechtwinklig zueinander verlaufen, voneinander beabstandet bzw. versetzt zueinander angeordnet. Mit anderen Worten sind die Kontaktierungspositionen jeder der Elektroden bezogen auf die Kontaktierungspositionen der weiteren Elektroden in zwei zueinander orthogonalen Richtungen voneinander beabstandet bzw. versetzt.

Durch die versetzte Anordnung der Kontaktierungspositionen kann zwischen den Elektroden, d.h. parallel zu der Abstandslinie, ein elektrisches Feld mit einer erhöhten Homogenität erzeugt werden, d.h. im Vergleich zu Elektroden mit Kontaktierungspositionen, die senkrecht zu der Abstandslinie nicht versetzt sind. Bei einander gegenüberliegenden Elektroden können dadurch beispielsweise zwischen Punkten, die auf entgegengesetzten Seiten der Abstandlinie an zwei verschiedenen Elektroden angeordnet sind, ähnliche Potentialdifferenzen vorhanden sein. Folglich kann zwischen den Elektroden über die leitfähige Beschichtung hinweg ein relativ homogenes elektrisches Feld erzeugt werden. Wenn die Leitfähigkeit der Beschichtung über deren Fläche hinweg weitgehend homogen ist, führt eine hohe Homogenität des elektrischen Feldes über die Beschichtung hinweg zu einer homogenen Aufheizung der Abdeckung, wenn die Beschichtung über die Elektroden mit Energie bzw. Heizleistung versorgt wird.

Die transparente und elektrisch leitfähige Beschichtung ist ferner an einer Innenfläche des Abdeckungselements angeordnet. Durch diese Anordnung ist die Beschichtung gegenüber Einflüssen aus der Umgebung des optischen Sensors geschützt. Dadurch kann die Lebensdauer der Beschichtung und des optischen Sensors verlängert werden.

Die Elektroden können außerdem länglich ausgebildet sein und sich entlang eines jeweiligen Randes der Beschichtung erstrecken. Dadurch kann das elektrische Feld zwischen den Elektroden nahezu die gesamte Fläche der Beschichtung überdecken. Dies kann die Homogenität bei der Aufheizung der Abdeckung weiter verbessern.

Gemäß einer Ausführungsform können zwei Elektroden auf einander gegenüberliegenden Seiten (Rändern) der transparenten und elektrisch leitfähigen Beschichtung angeordnet sein. Durch diese Anordnung der Elektroden auf gegenüberliegenden Seiten (Rändern) der Beschichtung kann die homogene Aufheizung der Beschichtung und der Abdeckung insgesamt weiter verbessert werden. Außerdem können die Elektroden parallel zueinander verlaufen, wodurch die Homogenität des elektrischen Feldes und der Aufheizung der Abdeckung weiter erhöht werden kann.

Ferner können die zwei Elektroden einander gegenüberliegende Ränder der Beschichtung überlagern. Mit anderen Worten können die Ränder der Abdeckung vollständig durch die Elektroden abgedeckt sein. Dadurch kann das elektrische Feld zwischen den Elektroden über die gesamte Fläche der Beschichtung wirken, wodurch die Homogenität der Aufheizung über die Beschichtung weiter verbessert werden kann.

Gemäß einer weiteren Ausführungsform kann jede der mindestens zwei Elektroden mehrere Kontaktierungspositionen aufweisen, wobei eine Anzahl der Kontaktierungspositionen für jede der mindestens zwei Elektroden anhand eines Verhältnisses eines elektrischen Widerstands der leitfähigen Beschichtung und eines elektrischen Gesamtwiderstands der zwei Elektroden festgelegt sein kann.

Insbesondere ist der elektrische Widerstand der Beschichtung größer als der elektrische Gesamtwiderstand der mindestens zwei Elektroden. Das Verhältnis des elektrischen Widerstands der leitfähigen Beschichtung und des elektrischen Gesamtwiderstands der zwei Elektroden ist vorzugsweise größer als 5.

Es hat sich gezeigt, dass der elektrische Widerstand der Elektroden nicht notwendigerweise als vernachlässigbar angesehen werden kann (zum Beispiel bei Kunststoffabdeckungen), wenn ein homogenes elektrisches Feld zwischen diesen und damit eine homogene Heizung der leitfähigen Beschichtung erreicht werden sollen. Die Homogenität der Aufheizung kann erhöht werden, indem der elektrische Widerstand der Elektroden im Vergleich zu dem Widerstand der leitfähigen Beschichtung minimiert wird.

Zusätzlich kann das elektrische Feld zwischen den Elektroden dadurch bezüglich seiner Homogenität verbessert werden, dass die Anzahl der Kontaktierungspositionen für jede der mindestens zwei Elektroden erhöht wird. Je größer der elektrische Gesamtwiderstand der Elektroden ist, d.h. je kleiner das Verhältnis des elektrischen Widerstands der leitfähigen Beschichtung zum Gesamtwiderstand der Elektroden ist, desto größer sollte die Anzahl der Kontaktierungspositionen pro Elektrode sein. Umgekehrt kann die Anzahl der Kontaktierungspositionen verringert werden, indem der elektrische Gesamtwiderstand der Elektroden minimiert wird.

Um eine homogene Heizung mittels der leitfähigen Beschichtung zu erreichen, sollte deren elektrischer Widerstand der Beschichtung wie bereits erwähnt mindestens 5-mal größer als der Gesamtwiderstand der Elektroden sein. Dann kann es möglich sein, dass eine einzige Kontaktierungsposition pro Elektrode ausreichend ist, was jedoch von der gewünschten Heizleistung und dem elektrischen Widerstand der leitfähigen Beschichtung abhängt.

Gemäß einer ersten Ausgestaltung der Erfindung weist das Abdeckungselement eine Zylinderform mit einer Mantelfläche auf, und zwei Elektroden sind parallel umlaufend auf einer Innenseite der Mantelfläche angeordnet. Parallel umlaufend angeordnete Elektroden können im Gegensatz zu einer axialen Anordnung der zwei Elektroden, d.h. einer seitlichen Anordnung der Elektroden entlang der Mantelfläche, den elektrischen Widerstand der leitfähigen Beschichtung minimieren. Dadurch kann die Heizleistung, die mittels der leitfähigen Beschichtung erreicht werden kann, für eine vorgegebene Spannung zwischen den Elektroden maximiert werden.

Vorteilhafterweise können die zumindest zwei Elektroden in jeweiligen Randbereichen der Mantelfläche angeordnet sein. Dadurch kann die Fläche der Beschichtung zwischen den zwei Elektroden und somit die beheizbare Fläche maximiert werden. Bei einem optischen Sensor, der eine Scanfunktion in azimutaler Richtung ausführt, d.h. umlaufend über die Mantelfläche des zylinderförmigen Abdeckungselements, kann die parallel umlaufende Anordnung der Elektroden ferner ein größeres azimutales Gesichtsfeld bereitstellen als beispielsweise eine Anordnung der Elektroden in axialer Richtung.

Alternativ ist das Abdeckungselement gemäß einer anderen Ausgestaltung der Erfindung als Kegelstumpf ausgebildet, und zwei Elektroden sind umlaufend mit konstantem Abstand auf der Innenseite des Kegelstumpfs angeordnet. Die Vorteile der vorstehend beschriebenen erfindungsgemäßen Ausführung mit zylinderförmigem Abdeckungselement gelten entsprechend auch für diese erfindungsgemäße Ausführung mit kegelstumpfförmigem Abdeckungselement, da letztlich nur die Mantelfläche des Zylinders durch eine schräge Fläche ersetzt ist. Die schräge Fläche kann beispielsweise durch eine Entformungsschräge ausgebildet werden, wenn das Abdeckungselement mittels eines Spritzgussverfahrens hergestellt wird.

Gemäß einem nicht beanspruchten Beispiel kann das Abdeckungselement eine ebene Form aufweisen, und zwei Elektroden können an aneinander gegenüberliegenden Rändern der ebenen Form angeordnet sein. Eine ebene Abdeckung kann auf einfachere Weise hergestellt werden als beispielsweise eine zylinderförmige oder kegelstumpfförmige Abdeckung. Ferner kann auch die leitfähige Beschichtung auf einfachere Weise aufgebracht werden. Dadurch können die Kontaktierungspositionen leichter zugänglich sein als beispielsweise bei einer zylinderförmigen Abdeckung. Eine ebene Abdeckung kann zum Beispiel als Frontscheibe für einen entsprechend ausgebildeten statischen optischen Sensor vorgesehen sein.

Nachfolgend wird die Erfindung beispielhaft anhand vorteilhafter Ausführungsformen unter Bezugnahme auf die beigefügten Figuren beschrieben. Es zeigen, jeweils schematisch:

Fig. 1    eine Draufsicht einer Abdeckung für einen optischen Sensor,

Fig. 2    eine perspektivische Ansicht einer Abdeckung für einen optischen Sensor und

Fig. 3    Ergebnisse von Simulationen der Aufheizung einer Abdeckung für einen optischen Sensor.

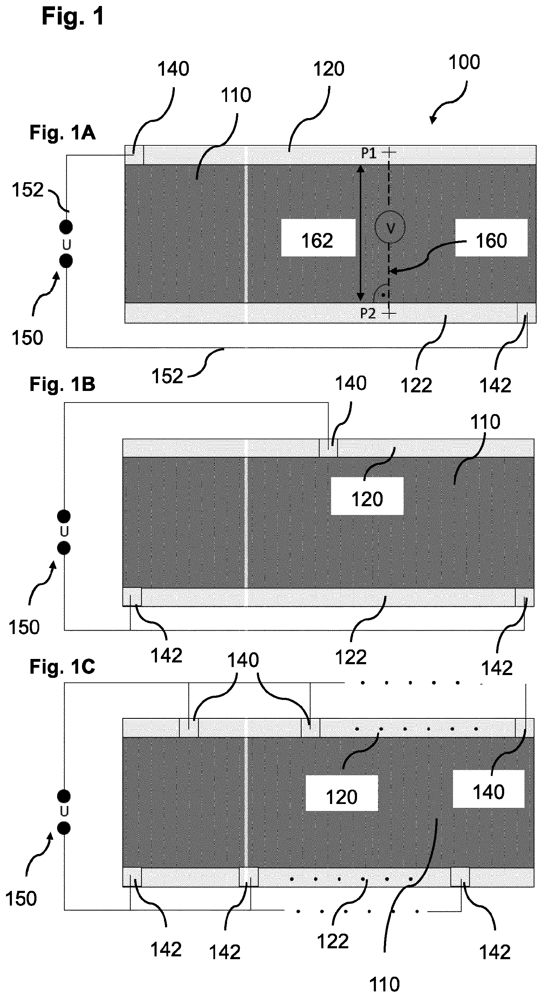

Fig. 1 zeigt eine schematische Draufsicht einer heizbaren Abdeckung 100 für einen optischen Sensor. Die Abdeckung 100 umfasst ein transparentes Abdeckungselement, das in der Draufsicht von Fig. 1 verdeckt und daher nicht abgebildet ist. Das transparente Abdeckungselement ist bei dem vorliegenden Beispiel eine ebene Frontscheibe des optischen Sensors.

An dem transparenten Abdeckungselement ist eine transparente und elektrisch leitfähige Beschichtung 110 angeordnet. Eine solche Beschichtung 110 umfasst beispielsweise eine mit einem TCF (von engl.: Transparent Conductive Film) beschichtete flexible Folie, wobei der TCF beispielsweise Kohlenstoff-Nanoröhrchen aufweist. Ferner können Silbernanodrähte in einer Tinte mit Kohlenstoff-Nanoröhrchen eingelagert werden und auf eine flexible Folie aufgebracht werden. Die beschichtete flexible Folie wird anschließend als die transparente und elektrisch leitfähige Beschichtung 110 auf der Innenseite des Abdeckungselements angebracht.

An jeweiligen Rändern auf gegenüberliegenden Seiten der transparenten und elektrisch leitfähigen Beschichtung 110 ist eine jeweilige Elektrode 120, 122 angebracht. Eine Elektrode 120 überlagert einen oberen Rand der Beschichtung 110, während eine weitere Elektrode 122 einen unteren Rand der Beschichtung 110 überlagert. Die Elektroden 120, 122 verlaufen parallel zueinander und sind derart länglich ausgebildet, dass sie die jeweiligen Ränder der transparenten und elektrisch leitfähigen Beschichtung 110 vollständig überdecken. Die Elektroden 120, 122 bestehen beispielsweise aus Gold oder Silber und sind mittels **PVD** (von engl.: Physical Vapor Deposition) auf die Beschichtung 110 aufgetragen.

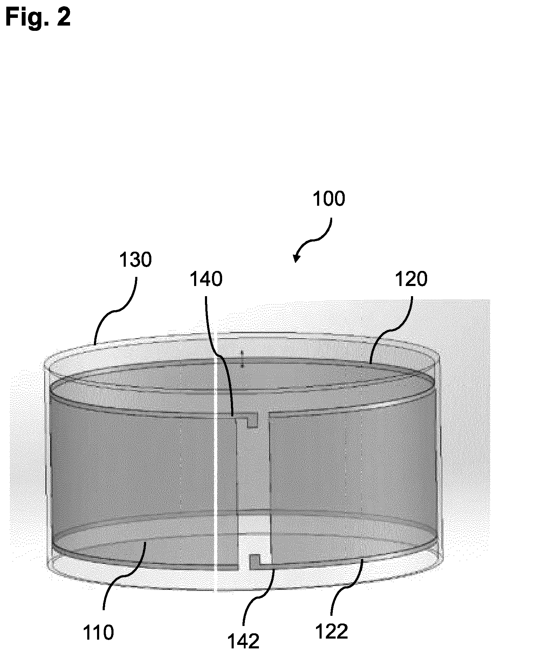

Bei der in Fig. 2 dargestellten erfindungsgemäßen Ausführungsform der heizbaren Abdeckung 100 umfasst diese ein transparentes Abdeckungselement 130, das zylinderförmig ausgebildet ist. Auf der Innenseite des transparenten Abdeckungselements 130 ist wiederum die transparente und elektrisch leitfähige Beschichtung 110 aufgetragen. An der Oberseite der Beschichtung 110 ist ferner die Elektrode 120 angeordnet, während an der Unterseite der Beschichtung 110 die Elektrode 122 angeordnet ist. Ebenso wie bei dem ebenen Ausführungsbeispiel des Abdeckungselements und der Beschichtung 110 von Fig. 1 verlaufen die Elektroden 120, 122 bei der in Fig. 2 dargestellten Ausführungsform der Abdeckung 100 mit zylindrischem Abdeckungselement 130 parallel zueinander und überlagern den oberen bzw. unteren Rand der Beschichtung 110 vollständig.

Die Elektroden 120, 122 sind im Ausführungsbeispiel von Fig. 2 umlaufend an den jeweiligen Rändern der Beschichtung 110 angeordnet, d.h. umlaufend um eine nicht dargestellte Zylinderachse des zylindrischen Abdeckungselements 130. Die in Fig. 1A dargestellte ebene Ausführungsform der Abdeckung 100 kann somit auch als schematische, abgewickelte Darstellung der Innenseite des transparenten Abdeckungselements 130 für die Ausführungsform der Abdeckung 100 von Fig. 2 angesehen werden. Umgekehrt gesehen ist die ebene Beschichtung 110 mit den Elektroden 120, 122 von Fig. 1 bei der Ausführungsform der Abdeckung 100 von Fig. 2 auf die Innenseite des zylindrischen Abdeckungselements 130 aufgebracht. Die nachfolgenden Ausführungen für die ebenen Ausführungsformen des transparenten Abdeckungselements, die in Fig. 1A, 1B und 1C dargestellt sind, gelten folglich sinngemäß ebenso für die Ausführungsform der Abdeckung 100 von Fig. 2 mit zylinderförmigem Abdeckungselement 130.

In der Ausführungsform von Fig. 1A weisen die Elektroden 120, 122 jeweils eine Kontaktierungsposition 140 bzw. 142 auf, über welche die jeweilige Elektrode 120, 122 mit einer Spannungsquelle 150 verbunden ist. Die Elektroden 120, 122 sind über die Kontaktierungspositionen 140, 142 mittels elektrischer Leitungen 152 mit der Spannungsquelle 150 verbunden.

In der Ausführungsform von Fig. 1A weist jede der Elektroden 120, 122 jeweils nur eine Kontaktierungsposition 140 bzw. 142 auf, die jeweils an entgegengesetzten Enden der Elektroden 120, 122 angeordnet sind. In der Ausführungsform von Fig. 1B hingegen weist die Elektrode 120 eine zentrale Kontaktierungsposition 140 auf, während die weitere Elektrode 122 zwei Kontaktierungspositionen 142 an jeweiligen Enden der Elektrode 122 aufweist. Die in Fig. 1C dargestellte weitere Ausführungsform der Abdeckung 100 weist ferner sowohl an der Elektrode 120 als auch an der Elektrode 122 eine Vielzahl jeweiliger Kontaktierungspositionen 140,142 auf.

Den drei Ausführungsformen von Fig. 1A, 1B und 1C ist gemeinsam, dass die Kontaktierungspositionen 140 der Elektrode 120 bezogen auf die Kontaktierungspositionen 142 der weiteren Elektrode 122 versetzt angeordnet sind. Wenn eine Abstandslinie 160 zwischen den Elektroden 120, 122 deren minimalen Abstand festlegt, bedeutet die versetzte Anordnung der Kontaktierungspositionen 140, 142 bezogen aufeinander, dass diese in einer Richtung, die rechtwinklig zu der Abstandslinie 160 verläuft, voneinander beabstandet sind. In den Ausführungsformen von Fig. 1A, 1B, 1C und 2 ist der Abstand 162 zwischen den Elektroden 120, 122 jedoch konstant, so dass die Abstandslinie 160 an einer beliebigen Position entlang der Elektroden 120, 122 in einer Richtung senkrecht zu diesen angeordnet werden kann.

Da die transparente und elektrisch leitfähige Beschichtung 110 zwischen den Elektroden 120, 122 angeordnet ist, wird ein elektrisches Feld über die Beschichtung 110 gebildet, sobald die Elektroden 120, 122 mit der Spannungsquelle 150 verbunden sind. Die Beabstandung der Kontaktierungspositionen 140, 142 in der Richtung senkrecht zu der Abstandslinie 160 bewirkt, dass zwischen zwei beliebigen Punkten P1 und P2, die auf entgegengesetzten Seiten der Beschichtung 110 und der Abstandslinie 160 an jeweils einer der Elektroden 120, 122 angeordnet sind, ähnliche oder nahezu gleiche Potentialdifferenzen bzw. elektrische Feldstärken vorhanden sind, wenn die Elektroden 120, 122 über die Kontaktierungspunkte 140, 142 mit der Spannungsquelle verbunden sind.

Mit anderen Worten tritt eine ähnliche oder nahezu gleiche Potentialdifferenz zwischen jeweiligen Punkten P1, P2 auf beiden Seiten der leitfähigen Beschichtung 110 auf, wenn diese den gleichen Abstand voneinander aufweisen. Entlang der Elektroden 120, 122 tritt für solche Punktepaare P1, P2 somit eine ähnliche oder nahezu gleiche Potentialdifferenz auf.

Durch das nahezu homogene elektrische Feld zwischen den zwei Elektroden 120, 122 tritt innerhalb der transparenten und elektrisch leitfähigen Beschichtung 110 eine nahezu homogene Erwärmung in der Beschichtung 110 auf, da aufgrund des elektrischen Widerstands der Beschichtung 110 ein Strom durch die Beschichtung 110 fließt, sobald die Elektroden 120, 122 mit der Spannungsquelle 150 verbunden sind. Dies gilt natürlich nur, wenn auch die Beschichtung 110 über ihre Fläche hinweg einen nahezu homogenen elektrischen Widerstand aufweist.

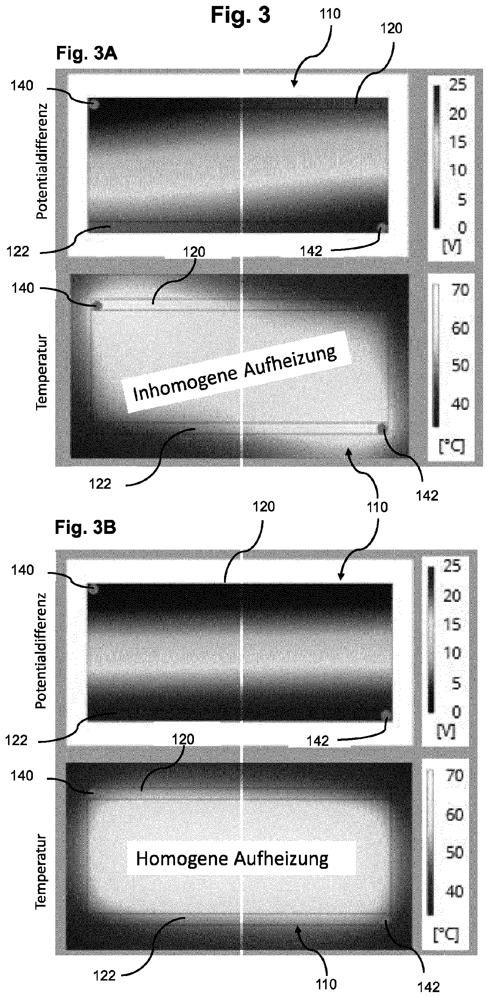

Die Breite der Elektroden 120, 122 ist in den Darstellungen von Fig. 1 und 2 der Übersichtlichkeit halber stark vergrößert dargestellt. In der tatsächlichen Ausführung der Abdeckung 100 weisen die Elektroden 120, 122 in der Richtung der Abstandslinie 160 eine Breite auf, die im Vergleich zu dem Abstand 162 der Elektroden 120, 122 sehr gering ist. Aufgrund der geringen Breite der Elektroden 120, 122 ist der elektrische Widerstand der Elektroden 120, 122 im Vergleich zu dem elektrischen Widerstand der Beschichtung 110 bzw. zu dem Gesamtwiderstand, an welchem die Spannung der Spannungsquelle 150 anliegt, nicht vernachlässigbar. Wie nachstehend im Zusammenhang mit Fig. 3 näher erläutert wird, kann ein relativ hoher Widerstand der Elektroden 120, 122 im Vergleich zu dem Widerstand der Beschichtung 110 zu einer Inhomogenität des elektrischen Feldes und der Aufheizung über die Beschichtung 110 führen.

Die Homogenität des elektrischen Feldes zwischen den Elektroden 120, 122, d.h. über die Beschichtung 110, kann erhöht werden, indem die Zahl der Kontaktierungspunkte 140, 142 an den jeweiligen Elektroden 120, 122 erhöht wird, wie dies für die Ausführungsformen von Fig. 1B und 1C dargestellt ist. Für eine gewünschte Feldhomogenität kann die Anzahl der Kontaktierungspunkte 140, 142 jedoch minimiert werden, indem die Kontaktierungspunkte 140 an der einen Elektrode 120 bezogen auf die Kontaktierungspunkte 142 an der anderen Elektrode 122 in der Richtung rechtwinklig zu der Verbindungslinie 160 versetzt zueinander angeordnet werden. Die Anzahl der notwendigen Kontaktierungspunkte für eine vorgegebene Feldhomogenität ist durch das Verhältnis des elektrischen Widerstands der leitfähigen Beschichtung 110 zu dem elektrischen Gesamtwiderstand der Elektroden 120, 122 festgelegt.

Wie bereits vorstehend erläutert wurde, sind die Elektroden 120, 122 bei der in Fig. 2 dargestellten Ausführungsform der heizbaren Abdeckung mit zylinderförmigem Abdeckungselement 130 parallel umlaufend an jeweiligen Rändern der Beschichtung 110 angeordnet. Für einen gegebenen Flächenwiderstand $R_{sheet}$ der Beschichtung 110 ist der Gesamtwiderstand, der für die Heizleistung relevant ist, durch das Produkt des Flächenwiderstands $R_{sheet}$ der Beschichtung 110 und des Verhältnisses von Höhe h und Umfang $2\pi R$ des zylinderförmigen Abdeckungselements 130 gegeben, wobei R der Zylinderradius ist:

$$R_B = R_{sheet} \times h/(2\pi R)$$

Die Höhe h des Abdeckungselements 130 entspricht im Ausführungsbeispiel von Fig. 2 näherungsweise der axialen Länge, über die sich die Beschichtung 110 erstreckt, und dem Abstand 162 (vgl. Fig. 1) der Elektroden 120, 122 parallel zu der Zylinderachse des Abdeckungselements 130. Mit anderen Worten ist die Mantelfläche der zylindrischen Abdeckung 100 von Fig. 2 nahezu vollständig mit der Beschichtung 110 abgedeckt. Der Umfang $2\pi R$ des Abdeckungselements 130 entspricht näherungsweise der Länge der Elektroden 120, 122.

Der Flächenwiderstand beträgt für eine leitfähige Beschichtung 110, die beispielsweise einen vorstehend beschriebenen TCF umfasst, etwa 50 bis 100 Ohm. Bei einem beispielhaften Flächenwiderstand von 100 Ohm und einem Verhältnis von Höhe h zu Umfang $2\pi R$ von 0,085 für eine zylindrische Abdeckung eines beispielhaften scannenden optischen Sensors ergibt sich ein Gesamtwiderstand $R_B$ von etwa 8,5 Ohm. Die Heizleistung über die Beschichtung 110 mit dem Widerstand $R_B$ ist durch $P = UI = U^2/R_B$ gegeben, wenn eine Spannung U an der Beschichtung anliegt. Somit beträgt die Heizleistung bei einer Spannung von 20 V, die an den Elektroden 120, 122 anliegt, etwa 47 W für die beispielhafte Beschichtung 110 mit einem Widerstand von 8,5 Ohm, die an einer Mantelfläche einer zylindrischen Abdeckung angebracht ist.

Wenn die Elektroden 120, 122 in axialer Richtung angeordnet werden würden, d.h. parallel zur Zylinderachse des Abdeckungselements 130 an den in axialer Richtung verlaufenden Rändern der Beschichtung 110, wäre der Gesamtwiderstand durch das umgekehrte Verhältnis des Umfangs $2\pi R$ zur Höhe h der Abdeckung 100 multipliziert mit dem Flächenwiderstand $R_{Sheet}$ gegeben. Bei der vorstehend beschriebenen beispielhaften zylinderförmigen Abdeckung würde sich aufgrund des geringen Verhältnisses von 0,085 der Höhe h zum Umfang $2\pi R$ ein Wert von etwa 12 für das umgekehrte Verhältnis des Umfangs $2\pi R$ zur Höhe h ergeben. Dies würde zu einem erheblich größeren Gesamtwiderstand von etwa 1200 Ohm bei einem Flächenwiderstand $R_{Sheet}$ von 100 Ohm führen, und die Heizleistung wäre bei der gleichen angelegte Spannung etwa um einen Faktor 20 geringer als bei der umlaufenden Anordnung der Elektroden 120, 122, wie diese in Fig. 2 dargestellt ist. Im Vergleich zu der axialen Anordnung der Elektroden 120, 122 liefert die Ausführungsform mit parallel umlaufenden Elektroden 120, 122 somit eine erheblich größere Heizleistung über die Beschichtung 110.

In Fig. 3 sind Ergebnisse einer beispielhaften thermischen Simulation dargestellt, die für eine Beschichtung 110 auf einem ebenen Abdeckungselement durchgeführt wurde, wie diese beispielsweise in Fig. 1A dargestellt ist. Im jeweils oberen Diagramm von Fig. 3A und 3B ist die Verteilung der Potentialdifferenz in V über die Beschichtung 110 dargestellt, wobei die Elektroden 120, 122 am oberen bzw. unteren Rand der Beschichtung 110 angeordnet sind. Im unteren Diagramm von Fig. 3A und 3B ist die Temperaturverteilung über die Beschichtung 110 dargestellt, wobei die Elektroden 120, 122 ebenfalls am oberen bzw. unteren Rand der Beschichtung 110 angeordnet sind. Ferner ist an jeder der Elektroden 120, 122 jeweils ein Kontaktierungspunkt 140 bzw. 142 angeordnet.

Für die Simulation von Fig. 3A wurde ein relativ großer Gesamtwiderstand der Elektroden 120, 122 angenommen, d.h. ein Gesamtwiderstand der Elektroden in der gleichen Größenordnung wie der elektrische Widerstand der Beschichtung 110. Konkret wurde für die Simulation von Fig. 3A angenommen, dass das Verhältnis des Widerstands der Beschichtung 110 zu dem Gesamtwiderstand der Elektroden 120, 122 klein gegen 5 ist.

Für die Simulation von Fig. 3B hingegen wurde ein geringerer Gesamtwiderstand der Elektroden 120, 122 angenommen, d.h. ein Gesamtwiderstand der Elektroden 120, 122, der erheblich geringer als der elektrische Widerstand der Beschichtung 110 ist. Im Detail wurde für die Simulation von Fig. 3B angenommen, dass das Verhältnis des Widerstands der Beschichtung 110 zu dem Gesamtwiderstand der Elektroden 120, 122 groß gegen 5 ist.

Auf der rechten Seite neben den jeweiligen Diagrammen der Potentialdifferenz und der Temperatur sind Werte der Potentialdifferenz und der Temperatur über die Beschichtung angegeben, die den jeweiligen Graustufen in den Diagrammen von Fig. 3A und 3B zugeordnet sind. In den jeweils oberen Diagrammen liegt eine Potentialdifferenz von 0V jeweils an der unteren Elektrode 122 vor, während an der oberen Elektrode eine Potentialdifferenz von 25 V vorliegt. In den jeweils unteren Diagrammen ist der eine hellere Schattierung jeweils einer höheren Temperatur von bis zu 70 Grad Celsius zugeordnet.

Man erkennt, dass im oberen Diagramm von Fig. 3A, bei dem ein relativ hoher Widerstand der Elektroden 120, 122 angenommen wurde, eine ungleichmäßige Potentialverteilung zwischen den Elektroden vor allem entlang der Unterseite und der Oberseite der Beschichtung 110 vorliegt. Dies führt zu einer inhomogenen Aufheizung der Beschichtung 110, wie man dies an der helleren und dunkleren Schattierung im unteren Diagramm von Fig. 3A erkennen kann.

Wie man im oberen Diagrammen von Fig. 3B im Vergleich zum oberen Diagramm von Fig. 3A erkennen kann, führt ein geringer Widerstand der Elektroden 120, 122 im Vergleich zum Widerstand der Beschichtung 110 zu einer erheblich homogeneren Spannungsverteilung über die Beschichtung 110. Dies bedingt eine erheblich homogenere Temperaturverteilung bzw. Aufheizung über die Beschichtung 110, wie dies im unteren Diagramm von Fig. 3B zu erkennen ist. Dadurch wird das entsprechende Abdeckungselement 130, das mit der Beschichtung 110 in Kontakt steht und beispielsweise in Fig. 2 dargestellt ist, ebenfalls homogener aufgeheizt als bei der Ausführung von Fig. 3A mit höherem Widerstand der Elektroden 120, 122.

Zusammengefasst lässt sich ein homogenes elektrisches Feld über die Beschichtung 110 und damit eine homogene Aufheizung einerseits dadurch erreichen, dass die Kontaktierungspositionen 140, 142 an den Elektroden 120, 122 versetzt zueinander angeordnet werden, wie dies in Fig. 1 dargestellt ist. Wie man anhand von Fig. 3 erkennen kann, wird die Homogenität des elektrischen Feldes und damit der Aufheizung der Abdeckung 100 zusätzlich dadurch erhöhen, dass der elektrische Widerstand der Elektroden 120,122 mit dem elektrischen Widerstand der Beschichtung 110 derart abgestimmt wird, dass der Widerstand der Elektroden 120,122 deutlich kleiner als der Widerstand über die Beschichtung 110 ist.

Obwohl die Erfindung nicht darauf beschränkt ist, ist sie besonders für Abdeckelemente aus Kunststoff geeignet, da sich hier auf Grund dessen gegenüber Glas schlechterer Wärmeleitfähigkeit bzw. höheren Wärmeausdehnung die beschriebene homogenisierende Wirkung der erfindungsgemäßen Anordnung als besonders vorteilhaft ergibt.

Bezugszeichenliste

| | |
|---|---|
| 100 | heizbare Abdeckung für einen optischen Sensor |
| 110 | transparente und elektrisch leitfähige Beschichtung |
| 120 | Elektrode |
| 122 | Elektrode |
| 130 | transparentes Abdeckungselement |
| 140 | Kontaktierungsposition |
| 142 | Kontaktierungsposition |
| 150 | Spannungsquelle |
| 152 | elektrische Leitung |
| 160 | Abstandslinie |
| 162 | Abstand zwischen den Elektroden |

**Patentansprüche**

1. Heizbare Abdeckung (100) für einen optischen Sensor, umfassend:

   ein transparentes Abdeckungselement (130), eine transparente und elektrisch leitfähige Beschichtung (110), die an dem Abdeckungselement (130) angeordnet ist, und mindestens zwei Elektroden (120, 122), die voneinander beabstandet sind und jeweils mit der Beschichtung (110) in Kontakt stehen, wobei ein jeweiliger Abstand (162) zwischen jeweils zwei der Elektroden (120, 122) entlang einer jeweiligen Abstandslinie (160) über die Beschichtung (110) hinweg festgelegt ist, wobei jede der zumindest zwei Elektroden (120, 122) mindestens eine Kontaktierungsposition (140, 142) aufweist, an welcher die jeweilige Elektrode (120, 122) mit einer Spannungsquelle (150) verbunden ist, und wobei die Kontaktierungspositionen (140, 142) jeweils zweier Elektroden (120, 122) in einer Richtung, die rechtwinklig zu der Abstandslinie (160) verläuft, voneinander beabstandet sind,

   **dadurch gekennzeichnet,**

   **dass** das Abdeckungselement (130) eine Zylinderform mit einer Mantelfläche aufweist und zwei Elektroden (120, 122) parallel umlaufend auf einer Innenseite der Mantelfläche angeordnet sind oder
   **dass** das Abdeckungselement (130) als Kegelstumpf ausgebildet ist und zwei Elektroden (120, 122) umlaufend mit konstantem Abstand auf einer Innenseite des Kegelstumpfs angeordnet sind.

2. Heizbare Abdeckung (100) nach Anspruch 1, **dadurch gekennzeichnet, dass** die Elektroden (120, 122) länglich ausgebildet sind und sich entlang eines jeweiligen Randes der Beschichtung (110) erstrecken.

3. Heizbare Abdeckung (100) nach Anspruch 1 oder 2, **dadurch gekennzeichnet, dass** zwei Elektroden (120, 122) auf einander gegenüberliegenden Seiten der Beschichtung (110) angeordnet sind.

4. Heizbare Abdeckung (100) nach Anspruch 3, **dadurch gekennzeichnet, dass** die zwei Elektroden (120, 122) einander gegenüberliegende Ränder der Beschichtung (110) überlagern.

5. Heizbare Abdeckung (100) nach einem der Ansprüche 1 bis 4, **dadurch gekennzeichnet, dass**

   jede der mindestens zwei Elektroden (120, 122) mehrere Kontaktierungspositionen (140, 142) aufweist und
   eine Anzahl der Kontaktierungspositionen (140, 142) für jede der mindestens zwei Elektroden (120, 122) anhand eines Verhältnisses eines elektrischen Widerstands der leitfähigen Beschichtung und eines elektrischen Gesamtwiderstands der mindestens zwei Elektroden (120, 122) festgelegt ist.

6. Heizbare Abdeckung (100) nach Anspruch 5, **dadurch gekennzeichnet, dass** der elektrische Widerstand der Beschichtung (110) größer als der elektrische Gesamtwiderstand der mindestens zwei Elektroden (120, 122) ist.

7. Heizbare Abdeckung (100) nach Anspruch 5 oder 6, **dadurch gekennzeichnet, dass** das Verhältnis des elektrischen Widerstands der leitfähigen Beschichtung (110) und des elektrischen Gesamtwiderstands der mindestens zwei Elektroden (120, 122) größer als fünf ist.

**Claims**

1. A heatable cover (100) for an optical sensor, said heatable cover (100) comprising:

    a transparent cover element (130),
    a transparent and electrically conductive coating (110) which is arranged at the cover element (130), and
    at least two electrodes (120, 122) which are spaced apart from one another and which are each in contact with the coating (110), wherein a respective distance (162) between a respective two of the electrodes (120, 122) is defined along a respective distance line (160) across the coating (110),
    wherein each of the at least two electrodes (120, 122) has at least one contacting position (140, 142) at which the respective electrode (120, 122) is connected to a voltage source (150), and
    wherein the contacting positions (140, 142) of a respective two electrodes (120, 122) are spaced apart from one another in a direction which extends at a right angle to the distance line (160),

    **characterized in that**

    the cover element (130) has a cylindrical shape with a lateral surface and two electrodes (120, 122) are peripherally arranged in parallel at an inner side of the lateral surface, or
    **in that** the cover element (130) is formed as a truncated cone and two electrodes (120, 122) are peripherally arranged with a constant distance at an inner side of the truncated cone.

2. A heatable cover (100) according to claim 1, **characterized in that** the electrodes (120, 122) are elongate and extend along a respective margin of the coating (110).

3. A heatable cover (100) according to claim 1 or 2, **characterized in that** two electrodes (120, 122) are arranged at mutually oppositely disposed sides of the coating (110).

4. A heatable cover (100) according to claim 3, **characterized in that** the two electrodes (120, 122) are superposed on mutually oppositely disposed margins of the coating (110).

5. A heatable cover (100) according to any one of the claims 1 to 4, **characterized in that**

    each of the at least two electrodes (120, 122) has a plurality of contacting positions (140, 142), and
    a number of the contacting positions (140, 142) for each of the at least two electrodes (120, 122) is defined based on a ratio of an electrical resistance of the conductive coating and a total electrical resistance of the at least two electrodes (120, 122).

6. A heatable cover (100) according to claim 5, **characterized in that** the electrical resistance of the coating (110) is greater than the total electrical resistance of the at least two electrodes (120, 122).

7. A heatable cover (100) according to claim 5 or 6, **characterized in that** the ratio of the electrical resistance of the conductive coating (110) and the total electrical resistance of the at least two electrodes (120, 122) is greater than five.

**Revendications**

1. Couvercle chauffant (100) pour un capteur optique, comprenant :

    un élément de couvercle transparent (130),
    un revêtement transparent et électriquement conducteur (110) disposé sur l'élément de couvercle (130), et
    au moins deux électrodes (120, 122) espacées l'une de l'autre et chacune en contact avec le revêtement (110), une distance respective (162) entre deux électrodes respectives (120, 122) étant fixée selon une ligne d'espacement respective (160) le long du revêtement (110),
    chacune desdites au moins deux électrodes (120, 122) présentant au moins un point de contact (140, 142) au niveau duquel l'électrode respective (120, 122) est connectée à une source de tension (150), et

les points de contact (140, 142) de deux électrodes respectives (120, 122) étant espacés l'un de l'autre dans une direction s'étendant à angle droit par rapport à la ligne d'espacement (160), **caractérisé en ce que** l'élément de couvercle (130) présente une forme cylindrique avec une surface enveloppe, et deux électrodes (120, 122) sont disposées circonférentiellement et parallèlement sur un côté intérieur de la surface enveloppe, ou l'élément de couvercle (130) est conçu comme un tronc de cône, et deux électrodes (120, 122) sont disposées circonférentiellement et à distance constante sur un côté intérieur du tronc de cône.

2. Couvercle chauffant (100) selon la revendication 1, **caractérisé en ce que** les électrodes (120, 122) sont de forme allongée et s'étendent le long d'un bord respectif du revêtement (110).

3. Couvercle chauffant (100) selon la revendication 1 ou 2, **caractérisé en ce que** deux électrodes (120, 122) sont disposées sur des côtés opposés du revêtement (110).

4. Couvercle chauffant (100) selon la revendication 3, **caractérisé en ce que** les deux électrodes (120, 122) chevauchent les bords opposés du revêtement (110).

5. Couvercle chauffant (100) selon l'une des revendications 1 à 4, **caractérisé en ce que**

   chacune desdites au moins deux électrodes (120, 122) présente plusieurs points de contact (140, 142), et
   le nombre de points de contact (140, 142) pour chacune desdites au moins deux électrodes (120, 122) est fixé par le rapport entre la résistance électrique du revêtement conducteur et la résistance électrique totale desdites au moins deux électrodes (120, 122).

6. Couvercle chauffant (100) selon la revendication 5, **caractérisé en ce que** la résistance électrique du revêtement (110) est supérieure à la résistance électrique totale desdites au moins deux électrodes (120, 122).

7. Couvercle chauffant (100) selon la revendication 5 ou 6, **caractérisé en ce que** le rapport entre la résistance électrique du revêtement conducteur (110) et la résistance électrique totale desdites au moins deux électrodes (120, 122) est supérieur à cinq.

# Fig. 1

### Fig. 1A

### Fig. 1B

### Fig. 1C

**Fig. 2**

## Fig. 3

### Fig. 3A

### Fig. 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4952783 A
- CN 114815358 A